Europäisches Patentamt

(19) European Patent Office

Office européen des brevets

(11) EP 0 760 250 A1

(12) EUROPEAN PATENT APPLICATION

(43) Date of publication:
05.03.1997 Bulletin 1997/10

(51) Int. Cl.$^6$: B01D 71/40, B01D 61/36, C10G 31/11

(21) Application number: 96202344.6

(22) Date of filing: 23.08.1996

(84) Designated Contracting States:
AT BE CH DE DK ES FI FR GB GR IE IT LI NL PT SE

(30) Priority: 25.08.1995 NL 1001060

(71) Applicant: NEDERLANDSE ORGANISATIE VOOR TOEGEPAST-NATUURWETENSCHAPPELIJK ONDERZOEK TNO
2628 VK Delft (NL)

(72) Inventors:
• Tinnemans, Aloijsius Henricus Antonius
  3707 BG Zeist (NL)
• Buijs, Henricus Carolus Willibrordus Maria
  2651 SL Berkel en Roderijs (NL)
• Koenhen, Dirk Marinus
  7701 RS Dedemsvaart (NL)

(74) Representative: Kupecz, A., Drs. c.s.
Octrooibureau Los en Stigter B.V.
Weteringschans 96
1017 XS Amsterdam (NL)

(54) **A membrane and method for the separation of aromatic hydrocarbons from a mixture of various aromatic hydrocarbons or from a mixture of such aromatic hydrocarbons and non-aromatic hydrocarbons**

(57)    The invention relates to membranes and to a method for the separation of aromatic hydrocarbons from a mixture of various aromatic hydrocarbons or from a mixture of such aromatic hydrocarbons and non-aromatic hydrocarbons. According to the invention the membrane is formed from a polymer matrix that may or may not be cross-linked being built up of

(a) one or more monofunctional monomers selected from the group of polymerizable monomers having one double bond, and/or
(b) one or more functional cross-linkable monomers selected from the group consisting of a polyfunctional, polymerizable monomer having at least two double bonds.

It is noted that the monofunctional monomer is an acrylate or meth-acrylate of the formula $CH_2=CHR$-$COOR^1$ in which R is H or methyl, and $R^1$ is a $C_1$-$C_{30}$ alkyl, benzyl or aryl group which may or may not be substituted by hetero atoms.
The polymeric matrix is formed under the influence of U.V. irradiation, electron irradiation or thermal treatment.

Figure

## Description

The invention relates to membranes for the separaation of aromatic hydrocarbons from a mixture of various aromatic hydrocarbons or from a mixture of such aromatic hydrocarbons and non-aromatic hydrocarbons, as well as to a method for the separation of aromatic hydrocarbons from a mixture of various aromatic hydrocarbons or from a mixture of such aromatic hydrocarbons and non-aromatic hydrocarbons.

It is noted that aromatic hydrocarbons are generally separated from a mixture of aromatic hydrocarbons and aliphatic hydrocarbons by means of distillation and/or extraction. With respect to saving energy, these methods are inefficient in comparison with pervaporation. In particular if the aliphatic/aromatic components have similar vapour pressures so that they form azeotropes as, for instance the benzene-cyclohexane system, pervaporation is especially useful for the separation of mixtures which contain the aromatic component to be removed in low a concentration, namely at least lower than 50% by weight.

There are many polymer membranes which are known to exhibit a different solubility and transport behaviour compared with organic molecules, and many of these seem to be suitable as pervaporation membranes. Some of the membranes suggested to be suitable under pervaporation conditions include isotropic membranes, asymmetric membranes and thin-film composite membranes.

I. Cabasso (Organic liquid mixtures separation by permselective polymer membranes. 1. Selection and characterization of dense isotropic membranes employed in the pervaporation process, *Ind. Eng. Prod. Res. Dev., 22, 313-319 (1983)*), has studied alloy membrane films consisting of polymer mixtures based on cellulose acetate which may or may not be cross-linked, with a high degree of molecular entanglement due to inter-polymeric mixing of two compatible networks. It was found, for instance, that when separating benzene/cyclohexane, a 20 $\mu$m film of cellulose acetate/poly[styrene(diethyl)phosphonate] exhibited selectivities up to 12-40 with the corresponding fluxes up to 0.8-1 kg $\cdot$ m$^{-2}$ $\cdot$ hour$^{-1}$ for a 50/50% by weight mixture. However, the development of high flux anisotropic membranes based on the above-mentioned attractive materials did not prove to be a success.

A number of patents to the name of Exxon (EP 0 312 374, EP 0 312 375, EP 0 312 379, US 5,063,186, EP 0 312 376, US 5,030,355, EP 0 312 377, EP 0 312 378, US 4,929,357, US 4,983,338) and Bayer (EP 0 398 093, EP 0 336 241, US 4,115,465, DE 3,927,787) show that basically polyurethane elastomers or their alloys are suitable as pervaporation membrane materials for the separation of aromatic and aliphatic hydrocarbons. Both anisotropic elastomer membranes and thin-film composite membranes have been described. In the latter case a thin active selective layer (< 1$\mu$m) is applied to a microporous carrier substrate by suspension deposition of by deposition from solution, allowing the solvent to evaporate and/or allowing it to pass through the thick permeable carrier layer. The membrane's properties are comparable to those described above. However, an important disadvantage is that in particular the selectivity is too low to eliminate small quantities of aromatic volatile components from aliphatic mixtures.

Only few systematic studies have been carried out to determine the relationship between the chemical properties of a membrane and its separation ability. For instance, the performance of elastomeric polyurethane membranes Is dominated by the physicochemical properties of the soft segment matrix phase of the non-porous separation layer, in particular the chemical composition, the ratio hard and soft segments, cross-linking density and the glass transition temperature (H. Ohst, K. Hildenbrand, R. Dhein, Polymer structure/properties-correlation of polyurethane PV-membranes for aromatic/aliphatic separation, *Proceedings of the 5th International Conference on Pervaporation Processes in the Chemical Industry*, Heidelberg, Germany, March 11-15, 1991).

The capacity of polyurethane-imide membranes to sepaarate aromatics and non-aromatics has also been examined (B.A. Koenitzer, US 4,929,358 to Exxon Research and Engineering Co., Polyurethane-imide, membranes and their use for the separation of aromatics from non-aromatics).

Polyimide/aliphatic polyester copolymers having various hard and soft segments (US 4,990,275, US 4,994,880), as well as polyimide/aliphatic polyesters copolymers without carboxyl groups (US 5,241,039) have been evaluated as membrane material. The advantage of all these materials is, for instance, that they have a higher aromatic/saturated selectivity than polyurethanes. It is noted that only polymer films have been evaluated.

Other membrane materials very recently patented by Exxon comprise polyesters (US 4,976,868), polyarylates (US 5,012,036), sulphonated polysulphons (US 5,055,631), polycarbonates (US 5,019,666) and polyphthalate carbonates (US 5,012,035), thermally cross-linked nitrile-rubber membranes (US 4,885,096) and multi-block polymers (PCT/US 91/08494, US, 5,039,417, US 5,039,418, US 5,039,422, US 5,049,281) having a first prepolymer - an imide or amide acidic prepolymer (US 5,039,417), an oxazolidon prepolymer (US 5,039,418), a urea prepolymer (US 5,039,422) or a prepolymer produced by combining epoxy with diamine ((US 5,049,281) - which was extended with a compatible second prepolymer. For instance, pervaporation experiments of toluene/i-octane (50/50% by w/w) at 100°C have shown, that cross-linked polycarbonate films (thickness 30-50 $\mu$m) possess separation factors ($\beta$) of 34-77 and a flux rate of 66-7,7 kg $\cdot$ $\mu$m $\cdot$ m$^{-2}$ $\cdot$ h$^{-1}$.

Recently an article appeared about the use of a membrane formed from plasma-polymerizing monomers (US 5,207,909). According to a preferred embodiment the membrane is a plasma polymer film, formed from plasma which is able to polymerize the 2,4-pentane-dion monomer. For instance, pervaporation experiments of toluene/i-octane (50/50% by w/w) at 100°C show, separation factors ($\beta$) of 35 and a flux of 1.2 kg $\cdot$ $\mu$m $\cdot$ m$^{-2}$ $\cdot$ h$^{-1}$ at a feed pressure of 1 bar.

The permeation and pervaporation behaviour of benzene-cyclohexane mixtures was also examined by using poly[bis(2,2,2-trifluoroethoxy)phosphazene] membranes (F. Suzuki, K. Onozato, H. Yeagashi, Pervaporation of organic solvents by poly[bis(2,2,2-trifluoroethoxy)phosphazene] membrane, *J. Appl. Polym. Sci. 34, 2197 (1987)*. The separation properties of this membrane are comparable with the polyphosphonate membranes of Cabasso et al. (I. Cabasso, J. Jagur-Grodzinski, D. Vofsi, A study of permeation of organic solvents through polymeric membranes based on polymeric alloys of polyphosphonates and acetyl cellulose. II. Separation of benzene, cyclohexene, and cyclohexane, *J. Appl. Polym. Sci., 18, 2137 (1974)*; I.Cabasso, J. Jagur-Grodzinski, D. Vofsi, Polymeric alloys of phosphonated polystyrene or polyphenylene oxide with cellulose ester, polystyrene, or unsaturated polyester, US 4,073,754) having a separation factor of 12. The permeation fluxes of pure benzene and pure cyclohexane were 7.0 and 0.46 kg $\cdot$ $\mu$m $\cdot$ m$^{-2}$ $\cdot$ h$^{-1}$ respectively.

As alternative, US 4,802,987 discloses moreover the application of liquid membranes for the separation of aromatics from saturated hydrocarbons by using cellulose or cellulose acetate membranes impregnated with polyethylene glycol. In order to obtain high aromatic selectivity and high flux, the amount and type of polyethylene glycol must be carefully adjusted.

Apart from the above-mentioned examples, the pervaporation method was also successfully applied for the separation of alkyl aromatics from aromatic solvents and for the separation of alkyl aromatic isomers by using preferably asymmetrical, dense polyimide membranes (EP 0 160 140).

The separation of aromatic hydrocarbons from mixtures of aromatic and non-aromatic hydrocarbon mixtures under pervaporative conditions was improved by controlling the oxygen present in the feed mixture (US 5,095,171), for instance by adding small amounts of oxygen scavengers, such as hindered phenols, to the starting mixture.

Other methods for the separation of aromatic hydrocarbons from mixtures of aromatic and non-aromatic hydrocarbons use membranes under reversed osmosis (RO), perstraction or pervaporation conditions (J.R. Sweet, C.P. Darnell, GB 2,268,186 to EXXON Research and Engineering Co., Membrane/hydrocracking process for improved feedstock utilization in the production of reduced emissions gasoline) or under perstraction conditions, for instance, for the removal of multi-ring aromatics from the lubrication distillate (L.E. Black, R.C. Schucker, US 4,962,271 to EXXON Research and Engineering Co., Selective separation of multi-ring aromatic hydrocarbons from distillates by perstraction).

For a more detailed explanation of the terms perstraction and pervaporation reference is made to the US patent 5,055,631 column 2, from line 23.

It is the aim of the invention to provide membranes which are suitable for the separation of aromatic hydrocarbons from a mixture of various aromatic hydrocarbons or from a mixture of such aromatic hydrocarbons and non-aromatic hydrocarbons having good selectivity and flux.

To this end the invention provides membranes for the separation of aromatic hydrocarbons from a mixture of various aromatic hydrocarbons or from a mixture of such hydrocarbons and non-aromatic hydrocarbons, characterized in that the membrane is formed from a polymer matrix that may or may not be cross-linked being built up of

(a) one or more monofunctional monomers selected from the group of polymerizable monomers having one double bond, and/or

(b) one or more functional cross-linkable monomers selected from the group consisting of a polyfunctional, polymerizable monomer having at least two double bonds.

The membranes according to the invention are new and possess a favourable separation factor as well as good flux.

According to the invention the monofunctional monomer may for instance be an acrylate or methacrylate of the formula $CH_2=CHR-COOR^1$ in which R is H or methyl, and $R^1$ represents a $C_1$-$C_{30}$ alkyl, benzyl or aryl group which may or may not be branched, and which may or may not be substituted by hetero atoms.

Good separation results are obtained if one of the monofunctional monomers is an acrylate or methacrylate comprising a $NH-CO-PO(OR^2)_2$ group in which $R^2$ is alkyl.

It is also particularly advantageous if one of the monofunctional monomers is diethyl-N-2(metharyloyloxy)ethylcarbamoyl phosphonate (IEM-DEP).

In another advantageous embodiment of the invention one of the monofunctional monomers is selected from the group consisting of n-butylacrylate, 3-phenylpropyl methacrylate.

A further embodiment according to the invention is one in which the monofunctional monomer is an acrylate or methacrylate of the formula $CH_2=CHR-CONR^3R^4$ in which R is H or methyl, and $R^3$ and $R^4$ represent $C_1$-$C_{30}$ alkyl groups which may or may not be branched, may or may not be identical, may or may not be mutually cross-linked.

Preferably one of the monofunctional monomers is N-vinyl pyrrolidon.

The polyfunctional cross-linkable monomer according to the invention is preferably a monomer of the formula $R^5-(CO-C(R)=CH_2)_n$ in which n is 2, 3 or 4, R is H or methyl, and $R^5$ is derived from a polyalcohol or a polyamine.

Good results are obtained if the polyfunctional monomer is selected from the group tripropylene glycol di(meth)acrylate, 1,6-n-hexanediol di(meth)acrylate and tris-methylolpropane tri(meth)acrylate.

Advantageously the poly-functional cross-linkable monomer is selected from the group consisting of urethane-(meth)-acrylates, epoxy-(meth)acrylates, polyester-(meth)-acrylates, polyether-(meth)acrylates and polyamine-(meth)-acrylates.

The polymeric matrix in the membrane according to the invention is formed under the influence of U.V. irradiation, electron irradiation or thermal treatment.

The membrane according to the invention is especially suitable for utilization as composite membrane, where the membrane is applied to a carrier which, with regard to the mixture to be separated, is an inert carrier. As inert carrier an aromatic polyamide, polyimide or polyether amide material may be considered. Usually the carrier is applied to an inert non-woven, such as PET, PP and preferably PPS.

The invention comprises further a method for the separation of aromatic hydrocarbons from a mixture of various aromatic hydrocarbons or from a mixture of such aromatic hydrocarbons and non-aromatic hydrocarbons characterized in that the membrane is formed from a polymer matrix that may or may not be cross-linked being built up of

(a) one or more monofunctional monomers selected from the group of polymerizable monomers having one double bond, and/or
(b) one or more functional cross-linkable monomers selected from the group consisting of a polyfunctional, polymerizable monomer having at least two double bonds.

With the method according to the invention the mixtures used in the separation contained at least 1% by weight of aromatic hydrocarbons.

Examples of aromatic hydrocarbons separated from the mixtures are benzene, alkyl aromatics, such as toluene, etc.

It is noted that the membrane according to the invention is prepared according to a method of the prior art.

The membrane itself may occur in a variety of configurations and may be applied in a variety of shapes. The membrane may be flat or tubular. Flat membranes may be used rolled up into a spiral or as flat plates. Tubular and hollow fibre membranes, on the other hand, may be used in a bundled configuration.

A pervaporation test device was used having four membrane cells, which device was designed and constructed such that characterization of the membranes could be carried out on laboratory scale, with controllable concentration polarization and at a temperature up to 120°C.

The permeate was collected for analysis in a container, cooled with liquid nitrogen. For the benefit of the pervaporation process, only a little of the permeate is extracted in order to minimize the effects of concentration polarization and temperature loss. The downward permeate pressure is kept constant within 2 mbar with the aid of a vacuum pump and a valve provided between the condensers and the pump.

The basic membrane properties were determined by measuring the permselectivity with toluene/i-octane mixtures composed at a ratio of 5/95% by w/w. Measurements commenced after allowing the membrane film to acclimatize in the test cell for 1 hour at 90°C. The actual duration of the determination was usually 1 to 5 hours, depending on the permeate flux.

In the event that the experiment lasted several days, the vacuum was cancelled at the end of each working day, the temperature of the feed mixture was brought to ambient temperature, while the mixture was kept in contact with the membrane surface.

Preceding the experiment the membrane was conditioned by allowing the film first to swell in a toluene-i-octane mixture of 5/95% w/w during 24 hours at 90°C, unless stated otherwise. This swelling time is presumed to suffice for the film to reach optimal swelling.

The composition of the mixture and of the permeate samples was determined by refractometry. The permeate fluxes were determined by weighing the permeate samples in the cold trap.

The required capacity of a membrane for the pervaporation of a toluene/i-octane mixture is expressed by a separation factor $\beta$. The separation factor $\beta$ is defined as

$$\beta_{pervap} = \beta(toluene/i\text{-}octane) = \frac{C_{toluene}^{P}}{C_{i\text{-}octane}^{P}} / \frac{C_{toluene}^{F}}{C_{i\text{-}octane}^{F}}$$

or

$$C_{tol}^{P} / (1\text{-}C_{tol}^{P}) / C_{i\text{-}oct}^{F} / (1\text{-}C_{i\text{-}oct}^{F})$$

The specific permeation fluxes are expressed by:

$$F_{total} = [m_{total} * l] / [A * t] \qquad [kg.\mu m.m^{-2}.h^{-1}]$$

m is the total amount of collected permeate [kg]
l is the membrane thickness [$\mu$m]
A is the membrane surface [m$^2$]
t is time [h]

The specific permeate fluxes are used to compare various polymer film materials, assuming the flux of the permeate to be inversely proportional to the membrane thickness.

According to the invention the membranes were cast according to a method of the prior art.

The invention will now be further elucidated by the following non-limitative examples.

Example I

48 g of ™EBECRYL 150 (from UCB), a diacrylate oligomer derived from bisphenol A, and 2 g of the radical initiator 2-methyl-1-[4-(methylthio)phenyl]-2-morpholinopropan-1-one (™IRGACURE 907 from CIBA GEIGY) are mixed under stirring at room temperature until a homogeneous solution is obtained. The mixture is cast with a wire rod onto a glass plate of which the extreme ends are covered with two thin strips of a foil of propylene carbonate. A second glass plate covered with a foil of propylene carbonate is placed onto the cast solution in such a way that no air bubbles are enclosed. Then the subject is cured by treatment of each site with ultraviolet light during 60 seconds using a 1 kW UV-lamp (type HPA, Philips) at a distance of 36 cm. After curing the subject is exposed under ambient conditions to air and light for a period of at least 72 hours prior to the pervaporation experiments. The membrane possesses a thickness of 60 $\mu$m.

The pervaporative properties of the membrane are determined for a mixture of 5 wt.% of toluene and 95 wt.% of iso-octane at 90 °C, after conditioning during 24 hours at 90 °C in the same solvent mixture, with as a result a separation factor $\beta$(toluene/iso-octane) of 5 and a normalised flux of 1.1 kg.$\mu$m.m$^{-2}$.hour$^{-1}$.

Example II

In the manner described in example I a membrane film with a thickness of 68 $\mu$m is prepared comprising as building blocks 24 wt.% of ™EBECRYL 150, 72 wt.% of 3-phenylpropyl methacrylate, and 4 wt.% of the radical initiator ™IRGACURE 907.

The pervaporative properties of the membrane are determined in a corresponding manner as described in example I with as a result a separation factor $\beta$ of 9.5 and a normalised flux of 5.9 kg.$\mu$m.m$^{-2}$.hour$^{-1}$.

Example III

In the manner described in example I a membrane film with a thickness of 68 $\mu$m is prepared comprising as building blocks 30 wt.% of ™EBECRYL 150, 50 wt.% of 3-phenylpropyl methacrylate, 16 wt.% of n-butyl acrylate, and 4 wt.% of the radical initiator ™IRGACURE 907.

The pervaporative properties of the membrane are determined in a corresponding manner as described in example I with as a result a separation factor $\beta$ of 7.5 and a normalised flux of 6.2 kg.$\mu$m.m$^{-2}$.hour$^{-1}$.

Example IVa-d

In the manner described in example I a series of membrane films is prepared on the basis of N-vinyl pyrrolidone (NVP), ™EBECRYL 270 (from UCB; an undiluted aliphatic urethane diacrylate with M$_w$ ≈ 1.500, Höppler viscosity 3.000 mPa.s (60 °C)) and an acrylate (IEM-DEP) that is obtained by reaction of 2-isocyanatoethyl methacrylate (Monomer Polymer Labs) with diethyl phosphite (Aldrich) as basic film forming components, and a tripropylene glycol diacrylate (TPGDA from UCB) as reactive diluent. During the UV irradiation 2-benzyl-2-dimethylamino-1-(4-morpholinophenyl)butan-1-one (™IRGACURE 369 from CIBA GEIGY) is applied as radical initiator.

The results of the flux and separation factor tests, executed in a corresponding manner as described in example I, are mentioned in Table A.

Example V

12 g of ™EBECRYL 150, 30 g of 3-phenylpropyl methacrylate, 8 g of n-butyl acrylate are mixed under stirring at room temperature until a homogeneous solution is obtained. The mixture is cast with a wire rod onto a glass plate. The cast film is cured by irradiation with 10 Mrad electrons utilizing a 175 kV Electrocurtain Electron Beam system (ESI, Model CB 150/15/180L). The membrane film is removed from the glass plate by immersion in water and subsequently drying in air.

The pervaporative properties of the membrane having a thickness of 80 $\mu$m are determined in a corresponding manner as described in example I with as a result a separation factor $\beta$ of 8.1 and a normalised flux of 6.0 kg.$\mu$m.m$^{-2}$.hour$^{-1}$.

Example VI

45 g of ™EBECRYL 150, 45 g of 3-phenylpropyl methacrylate, 9 g of n-butyl acrylate, and 1 g of the radical initiator 2,2'-azobis(2-methylpropionitril) are mixed under stirring at room temperature until a homogeneous solution is obtained. The mixture is cast with a wire rod onto a glass plate. The cast film is cured by heating at 80 °C for 8 hours. The membrane film is removed from the glass plate by immersion in water and subsequently drying in air. The membrane has a thickness of 60 $\mu$m.

The pervaporative properties of the membrane are determined in a corresponding manner as described in example I with as a result a separation factor $\beta$ of 6.5 and a normalised flux of 5.5 kg.$\mu$m.m$^{-2}$.hour$^{-1}$.

Example VIIa-e

In the manner described in example I a series of membrane films is prepared on the basis of ™EBECRYL 244 (from UCB; an aliphatic urethane diacrylate diluted with 10% of HDDA; $M_w \approx 2.000$, Höppler viscosity 8.000 mPa.s (60°C)) as basic film forming component, and tripropylene glycol diacrylate (TPGDA from UCB) and/or hexanediol diacrylate (HDDA from UCB) as difunctional monomers. During the UV irradiation 1-hydroxycyclohexyl phenyl ketone (™IRGACURE 184 from CIBA GEIGY) is applied as radical initiator. As lamp source a 2.000 W UV-lamp (type HOK, Philips, 100W.cm$^{-1}$, slit width 0.25 m) was used at a distance of 0.25 m and a conveyer speed of 6 m.min$^{-1}$.

The results of the determination of the pervaporative properties executed in a mixture of 5 wt.% of benzene and 95 wt.% of cyclohexane at about 80 °C, after conditioning during 12 hours at 20 °C in the same solvent mixture, are mentioned in Table B.

Example VIIIa-b

In the manner described in example VII a series of membrane films is prepared on the basis of ™EBECRYL 244 as basic film forming component, tripropylene glycol diacrylate (TPGDA) and/or hexanediol diacrylate (HDDA) as difunctional monomers, and trimethylolpropane triacrylate (TMPTA from UCB) as trifunctional monomer. During the UV irradiation ™IRGACURE 184 is applied as radical initiator.

The results of the determination of the pervaporative properties executed in a mixture of 5 wt.% of benzene and 95 wt.% of cyclohexane at about 80 °C, after conditioning during 12 hours at 20 °C in the same solvent mixture, are mentioned in Table C.

Example IXa-d

In the manner described in example VII a series of membrane films is prepared on the basis of ™EBECRYL 230 (from UCB; an undiluted high molecular weight aliphatic urethane diacrylate; $M_w \approx 5.000$, Höppler viscosity 40.000 mPa.s) as basic film forming component, tripropylene glycol diacrylate (TPGDA) and/or trimethylolpropane triacrylate (TMPTA) as di- and trifunctional monomers, respectively. During the UV irradiation ™IRGACURE 184 is applied as radical initiator.

The results of the flux and separation factor tests, executed in a corresponding manner as described in example VII, are mentioned in Table D.

Example X

In the manner described in example VII a series of membrane films is prepared on the basis of 56 g of ™EBECRYL 230 as basic film forming component, 14 g of tripropylene glycol diacrylate (TPGDA) and 8 g of trimethylolpropane triacrylate (TMPTA) as di- and trifunctional monomers, and 20 g of $\beta$-carboxyethyl acrylate ($\beta$-CEA from UCB) as monofunctional comonomer. During the UV irradiation 2 g of ™IRGACURE 184 is applied as radical initiator.

The pervaporative properties of the resulting 100 $\mu$m membrane are determined for a mixture of 5.2 wt.% of benzene and 94.8 wt.% of cyclohexane at 78 °C, after conditioning during 12 hours at 20 °C in the same solvent mixture, with as a result a separation factor $\beta$ of 2.9 and a normalised flux of 192 kg.$\mu$m.m$^{-2}$.hour$^{-1}$.

Example XIa-d

In the manner described in example VII a series of membrane films is prepared on the basis of ™EBECRYL 215 (from UCB; an aromatic urethane diacrylate diluted with 20% of TPGDA; $M_w \approx 1.500$, Höppler viscosity 16.500 mPa.s) as basic film forming component, and tripropylene glycol diacrylate (TPGDA) and/or hexanediol diacrylate (HDDA) as difunctional monomers. During the UV irradiation ™IRGACURE 184 is applied as radical initiator.

The results of the flux and separation factor tests, executed in a corresponding manner as described in example VII, are mentioned in Table E.

Example XIIa-e

In the manner described in example VII a series of membrane films is prepared on the basis of ™EBECRYL 215 as basic film forming component, and tripropylene glycol diacrylate (TPGDA) and trimethylolpropane triacrylate (TMPTA) as di- and trifunctional monomers, respectively. During the UV irradiation ™IRGACURE 184 is applied as radical initiator.

The results of the flux and separation factor tests, executed in a corresponding manner as described in example VII, are mentioned in Table F.

Example XIIIa-e

In the manner described in example VII a series of membrane films is prepared on the basis of ™EBECRYL 215 as basic film forming component, tripropylene glycol diacrylate (TPGDA) and/or trimethylolpropane triacrylate (TMPTA) as di- and trifunctional crosslinking agens, respectively, as well as $\beta$-carboxyethyl acrylate ($\beta$-CEA) as monofunctional comonomer. During the UV irradiation ™IRGACURE 184 is applied as radical initiator.

The results of the flux and separation factor tests, executed in a corresponding manner as described in example VII, are mentioned in Table G.

Example XIV

In the manner described in example VII a series of membrane films is prepared on the basis of 56 g of ™EBECRYL 4244 (from UCB; an aromatic urethane diacrylate diluted with 20% of HDDA ($M_w \approx 4.000$, Höppler viscosity 10.000 mPa.s (60°C)) as basic film forming component, 14 g of tripropylene glycol diacrylate (TPGDA) and 28 g of hexanediol diacrylate (HDDA) difunctional crosslinking agens. During the UV irradiation 2 g of ™IRGACURE 184 is applied as radical initiator.

The pervaporative properties of the 70 $\mu$m membrane are determined for a mixture of 6.1 wt.% of benzene and 93.9 wt.% of cyclohexane at 79 °C, after conditioning during 12 hours at 20 °C in the same solvent mixture, with as a result a separation factor $\beta$ of 7.9 and a normalised flux of 3.1 $kg.\mu m.m^{-2}.hour^{-1}$.

Example XV

In the manner described in example VII a membrane film with a thickness of 70 $\mu$m is prepared on the basis of 44 g of ™EBECRYL 3702 (from UCB; a fatty acid modified epoxy acrylate; $M_w \approx 500$, Brookfield viscosity 2.300 mPa.s (65°C)) as basic film forming component, 44 g of tripropylene glycol diacrylate (TPGDA) as difunctional crosslinking agens, 10 g of $\beta$-carboxyethyl acrylate ($\beta$-CEA) as monofunctional comonomer, and 2 g of ™IRGACURE 184 as radical initiator.

The pervaporative properties of the membrane are determined for a mixture of 5.1 wt.% of benzene and 94.9 wt.% of cyclohexane at 80 °C, after conditioning during 12 hours at 20 °C in the same solvent mixture, with as a result a separation factor $\beta$ of 4.7 and a normalised flux of 1.4 $kg.\mu m.m^{-2}.hour^{-1}$.

Example XVI

*Preparation of flat microsporous support membrane.* A casting solution containing a 16% by weight solution of a polyimide type (Lenzing P 84) in dimethyl formamide was applied onto a moving non-woven polyester web. The casting speed was 1.7 m/min. and the slit width of the casting knife was 300 $\mu$m. The cast subject was transferred into demineralized water giving rise to formation of the microsporous support membrane by the phase-inversion process. The membrane was collected on a cylinder and the membrane was washed to remove residual solvent. The membrane had a water flux of 250 $L.m^{-2}.hour^{-1}.bar^{-1}$ at 25°C and a reduced nitrogen permeability of $14-16*10^{-6}$ $mol.m^{-2}.s^{-1}.Pa^{-1}$ at 30°C.

*Preparation of composite membrane.* Prior to preparing the composite membrane the above support membrane was repeatedly immersed in ethanol, and then air-dried. Then, a solution prepared from 490 g of chloroform, 5.3 g of ™EBECRYL 245 (from UCB; an aliphatic urethane diacrylate diluted with 25% of TPDGA; $M_W \approx 2.000$, Höppler viscosity 2.500 mPa.s (60°C) as basic film-forming component, 1.8 g of TPGDA and 28 g HDDA as difunctional monomers, and 0.2 g of ™IRGACURE 184 as radical initiator, was applied onto the support membrane (0.18mx0.30m) by spray-coating. Subsequently the membrane was cured by treatment with ultraviolet light (intensity 200 mJ.cm$^{-2}$) using a 2.000 W UV-lamp (type HOK, Philips, 100W.cm$^{-1}$, slit width 0.20 m) at a distance of 0.25 m and a conveyer speed of 6 m.min$^{-1}$.

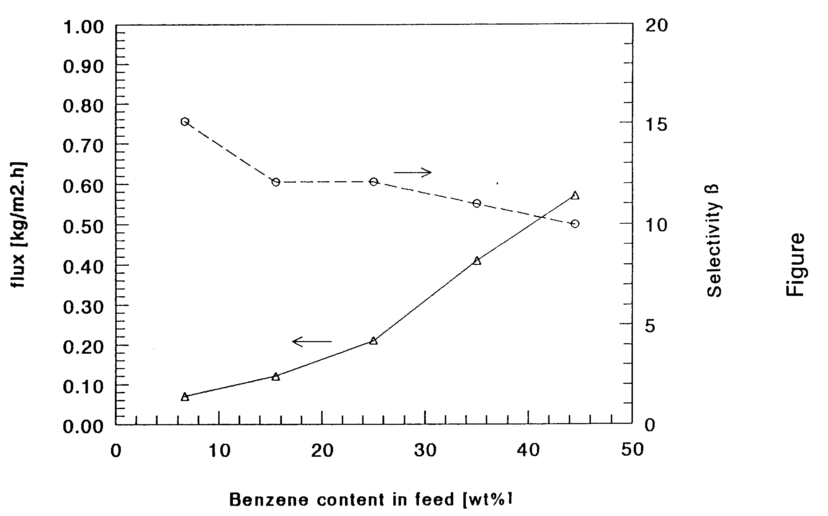

The results of the determination of the pervaporative properties executed in various mixtures of benzene and cyclohexane at 78°C, after conditioning during about 18 hours at 78°C in the same solvent mixture, are mentioned in Table H (see also the Figure).

Examples of ™EBECRYL epoxy acrylates, urethane acrylates, polyester acrylates, polyether acrylates, etc. can be found in U.S. 4.722.865.

E.P. 0 321 241 describes several photoinitiators and reactive diluents that can be applied according to the invention.

The numbers given in the Examples for the ™EBECRYL relate to the weight percentage of oligomeric resin.

Table A

| Example | Composition membrane film [Wt.%] | | | | | Toluene in feed [Wt.%] | Temp. [°C] | Film thickness [$\mu$m] | Normalised flux [kg.$\mu$m.m$^{-2}$.h$^{-1}$] | ß (toluene/ i-octane) |
|---------|---------|-------|-----|----------------|----------------|--------|------|------|------|------|
| | IEM-DEP | TPGDA | NVP | "EBECRYL 270 | "IRGACURE 369 | | | | | |
| IVa | 0 | 32.7 | 10.8 | 54.3 | 2.2 | 4.58 | 90 | 135 | 19.5 | 4.9 |
| IVb | 10 | 29.4 | 9.8 | 49.0 | 1.8 | 4.58 | 90 | 80 | 7.0 | 11.7 |
| IVc | 20 | 26.1 | 8.7 | 43.5 | 1.7 | 4.35 | 90 | 150 | 13.0 | 5.3 |
| IVd | 30 | 22.8 | 7.6 | 37.9 | 1.7 | 4.35 | 90 | 100 | 9.2 | 7.6 |

Table B

| Example | Composition membrane film [Wt.%] | | | Benzene in feed | Temp. | Film thickness | Normalised flux | ß |
|---------|--------|--------|--------|--------|--------|--------|--------|--------|
| | [1]EBECRYL 244 | TPGDA/HDDA | [1]Irgacure 184 | [wt.%] | [°C] | [$\mu$m] | [kg.$\mu$m.m$^{-2}$.h$^{-1}$] | (benzene/ cyclohexane) |
| VIIa | 56 | 35.8 / 6.2 | 2 | 5.1 | 77 | 70 | 3.1 | 8.6 |
| VIIb | 56 | 14 / 28 | 2 | 5.0 | 77 | 70 | 1.7 | 9.3 |
| VIIc | 56 | 0 / 42 | 2 | 4.9 | 77 | 70 | 1.9 | 9.4 |
| VIId | 46.8 | 46 / 5.2 | 2 | 5.1 | 77 | 70 | 2.0 | 8.5 |
| VIIe | 46.8 | 0 / 51.2 | 2 | 5.0 | 77 | 70 | 0.9 | 9.6 |

This example clearly demonstrates the effect of the ratio TPGDA and HDDA on the organic solvent flux and the separation factor.

EP 0 760 250 A1

Table C

| Example | Composition membrane film [Wt.%] | | | | Benzene in feed [wt.%] | Temp. [°C] | Film thickness [μm] | Normalised flux [kg.μm.m⁻².h⁻¹] | ß (benzene/cyclohexane) |
|---------|----------------|-------------|-------|------------------|------|------|------|------|------|
|  | "EBECRYL 244 | TPGDA/HDDA | TMPTA | "Irgacure 184 | | | | | |
| VIIIa | 70.2 | 0 / 7.8 | 20 | 2 | 5.1 | 78 | 85 | 1.7 | 8.6 |
| VIIIb | 56 | 21.8 / 6.2 | 14 | 2 | 5.1 | 80 | 80 | 1.5 | 8.4 |

Comparison of example VIIa from Table B and example VIIIb from Table C clearly demonstrates the effect of the trifunctional monomer on the organic solvent flux.

Table D

| Example | Composition membrane film [Wt.%] | | | | Benzene in feed | Temp | Film thickness | Normalised flux | ß |
|---------|--------------------------|-----------|-------|------------------|-----------------|------|----------------|-----------------|---|
| | [*]EBECRYL 230 | TPGDA/HDDA | TMPTA | [*]Irgacure 184 | [wt.%] | [°C] | [μm] | [kg.μm.m$^{-2}$.h$^{-1}$] | (benzene/ cyclohexane) |
| IXa | 56 | 14 / 28 | | 2 | 6.3 | 79 | 70 | 243 | 2.6 |
| IXb | 56 | 14 / 10 | 18 | 2 | 6.1 | 78 | 75 | 95 | 2.8 |
| IXc | 56 | 31 / 0 | 11 | 2 | 5.0 | 78 | 70 | 170 | 2.7 |
| IXd | 56 | 42 / 0 | | 2 | 4.9 | 79 | 70 | 110 | 2.7 |

Comparison of example VIIb from Table B and example IXa from Table D clearly demonstrates the effect of the molecular weight of the aliphatic diacrylate resin on the organic solvent flux and the separation factor.

Table E

| Example | Composition membrane film [Wt.%] | | | Benzene in feed | Temp. | Film thickness | Normalised flux | ß |
|---------|---------|---------|---------|---------|---------|---------|---------|---------|
| | "EBECRYL 215 | TPGDA/HDDA | "Irgacure 184 | [wt.%] | [°C] | [μm] | [kg.μm.m⁻².h⁻¹] | (benzene/ cyclohexane) |
| XIa | 78.4 | 19.6 / 0 | 2 | 5.1 | 79 | 70 | very high, too high degree of swelling | |
| XIb | 56 | 14 / 28 | 2 | 5.1 | 80 | 70 | 5.2 | 5.7 |
| XIc | 38.6 | 59.3 / 0 | 2 | 5.2 | 79 | 70 | 5.2 | 5.9 |
| XId | 8 | 90 / 0 | 2 | 5.0 | | 70 | Very hard and brittle | |

This example clearly demonstrates the large influence of the concentration of the basic film form forming component on the organic solvent flux.

13

Table F

| Example | Composition film [wt.%] | | | | Benzene in feed | Temp. | Film thickness | Normalised flux | ß (benzene/ cyclohexane) |
|---|---|---|---|---|---|---|---|---|---|
| | "EBECRYL 215 | TPGDA | TMPTA | "Irgacure 184 | [wt.%] | [°C] | [µm] | [kg.µm.m⁻².h⁻¹] | |
| XIIa | 64 | 31 | 3 | 2 | 5.2 | 78 | 75 | 18.5 | 4.5 |
| XIIb | 56 | 34 | 8 | 2 | 5.0 | 80 | 70 | 10.8 | 5.0 |
| XIIc | 56 | 14 | 28 | 2 | 5.2 | 78 | 110 | 8.9 | 5.4 |
| XIId | 39 | 39 | 20 | 2 | 5.3 | 79 | 70 | 4.2 | 6.2 |
| XIIe | 39 | 24 | 35 | 2 | 5.3 | 70 | 70 | 1.1 | 7.8 |

This example clearly demonstrates the large influence of the ratio of difunctional and trifunctional monomer on the organic solvent flux and separation factor.

Table G

| Example | Composition membrane film [Wt.%] | | | | | Benzene in feed [Wt.%] | Temp. [°C] | Film thickness [µm] | Normalised flux [kg.µm.m$^{-2}$.h$^{-1}$] | ß (benzene/ cyclohexane) |
|---|---|---|---|---|---|---|---|---|---|---|
| | [*]EBECRYL 215 | TPGDA | TMPTA | ß-CEA | [*]Irgacure 184 | | | | | |
| XIIIa | 56 | 28 | 4 | 10 | 2 | 5.0 | 80 | 70 | 8.5 | 5.2 |
| XIIIb | 56 | 20 | 2 | 20 | 2 | 4.8 | 80 | 70 | 4.8 | 5.9 |
| XIIIc | 37 | 56 | | 5 | 2 | 5.3 | 79 | 60 | 6.6 | 6.1 |
| XIIId | 36.6 | 52.1 | | 9.4 | 2 | 5.2 | 80 | 90 | 4.1 | 5.3 |
| XIIIe | 30.4 | 47.4 | | 20.2 | 2 | 5.0 | 70 | 70 | 2.4 | 6.7 |

EP 0 760 250 A1

15

EP 0 760 250 A1

Table H

| Example | Benzene in feed [wt.%] | Flux [$kg.m^{-2}.h^{-1}$] | β (benzene/cyclohexane) |
|---|---|---|---|
| XVIa | 6.7 | 0.07 | 15.1 |
| XVIb | 15.5 | 0.12 | 12.1 |
| XVIc | 24.8 | 0.21 | 12.1 |
| XVId | 35.0 | 0.41 | 11.0 |

## Claims

1. A membrane for the separation of aromatic hydrocarbons from a mixture of various aromatic hydrocarbons or from a mixture of such aromatic hydrocarbons and non-aromatic hydrocarbons **characterized** in that the membrane is formed from a polymer matrix that may or may not be cross-linked being built up of

    (a) one or more monofunctional monomers selected from the group of polymerizable monomers having one double bond, and/or
    (b) one or more functional cross-linkable monomers selected from the group consisting of a poly-functional, polymerizable monomer having at least two double bonds.

2. A membrane according to claim 1 **characterized** in that the monofunctional monomer is an acrylate or methacrylate of the formula $CH_2$=CHR-COOR$^1$ in which R is H or methyl, and R$^1$ is a $C_1$-$C_{30}$ alkyl, benzyl or aryl group which may or may not be branched, and which may or may not be substituted by hetero atoms.

3. A membrane according to claim 2 **characterized** in that one of the monofunctional monomers is an acrylate or methacrylate comprising a NH-CO-PO(OR$^2$)$_2$ group in which R$^2$ is alkyl.

4. A membrane according to claim 3 **characterized** in that one of the monofunctional monomers is diethyl-N-2(methacryloyloxy)ethylcarbamomyl phosphonate (IEM-DEP).

5. A membrane according to claim 2, **characterized** in that one of the monofunctional monomers is selected from the group consisting of n-butylacrylate, 3-phenylpropyl methacrylate.

6. A membrane according to claim 1, **characterized** in that the monofunctional monomer is an acrylate or methacrylate of the formula $CH_2$=CHR-CONR$^3$R$^4$ in which R is H or methyl, and R$^3$ and R$^4$ represent $C_1$-$C_{30}$ alkyl groups which may or may not be branched, may or may not be identical, or may or may not be mutually cross-linked.

7. A membrane according to claim 1, **characterized** in that one of the monofunctional monomers is N-vinyl pyrrolidon.

8. A membrane according to claim 1, **characterized** in that the poly-functional cross-linkable monomer is of the formula R$^5$-(CO-C(R)=CH$_2$)$_{11}$ in which n is 2, 3 or 4, R is H or methyl, and R$^5$ is derived from a polyalcohol or a polyamine.

9. A membrane according to claim 8, **characterized** in that the poly-functional monomer is selected from the group tripropylene glycol di(meth)acrylate, 1,6-n-hexanediol di(meth)acrylate and tris-methylolpropane tri(meth)acrylate.

10. A membrane according to claim 1, **characterized** in that the poly-functional cross-linkable monomer is selected from the group consisting of urethane-(meth)-acrylates, epoxy-(meth)acrylates, polyester-(meth)acrylates, polyether-(meth)acrylates and polyamine-(meth)acrylates.

11. A membrane according to claims 1-10, **characterized** in that the polymeric matrix is formed under the influence of U.V. irradiation, electron irradiation or thermal treatment.

16

**12.** A membrane according to claims 1-11, **characterized** in that the membrane is a composite membrane, where the membrane is applied to a carrier which, with regard to the mixture to be separated, is an inert carrier.

**13.** A membrane according to claim 12, **characterized** in that the inert carrier is an aromatic polyamide, polyimide or polyether amide material.

**14.** A membrane according to claim 13, **characterized** in that the carrier is applied to an inert non-woven, such as PET, PP and preferably PPS.

**15.** A method for the separation of aromatic hydrocarbons from a mixture of various aromatic hydrocarbons or from a mixture of such aromatic hydrocarbons and non-aromatic hydrocarbons, **characterized** in that the mixture is brought into contact with the permselective side of a membrane in accordance with any of the preceding claims 1-14 under pervaporation conditions or under perstraction conditions.

**16.** A method according to claim 15 **characterized** in that basically mixtures were used containing at least 1% by weight aromatic hydrocarbons.

**17.** A method according to claim 15 or 16 **characterized** in that the aromatic hydrocarbons separated from the mixtures are benzene, alkyl aromatics such as toluene, etc.

**18.** A method for the formation of membranes according to claims 1-14 **characterized** in that this is carried out by a method of the prior art.

Figure

European Patent
Office

**EUROPEAN SEARCH REPORT**

Application Number

EP 96 20 2344

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 288 712 (CHEN)<br><br>* abstract; claim 1 *<br>* column 3, line 36 - line 42 *<br>--- | 1,2,12,<br>15-18 | B01D71/40<br>B01D61/36<br>C10G31/11 |
| D,X | EP-A-0 321 241 (HOECHST CELANESE CORP)<br><br>* abstract; claims 1,2,5-8,13,14,17,18 *<br>* page 3, line 25 - page 4, line 11 *<br>* page 4, line 48 - page 5, line 2 *<br>* examples 1,2 * | 1,7-12,<br>18 | |
| A | --- | 13,15 | |
| X | CHEMICAL ABSTRACTS, vol. 120, no. 6,<br>7 February 1994<br>Columbus, Ohio, US;<br>abstract no. 56217,<br>XP002004319<br>* abstract *<br>& PATENT ABSTRACTS OF JAPAN<br>vol. 17, no. 533 (C-1114), 27 September 1993<br>& JP-A-05 146653 (OJI PAPER CO LTD), 15 June 1993,<br>* abstract *<br>& DATABASE WPI<br>Section Ch, Week 9328<br>Derwent Publications Ltd., London, GB;<br>Class A28, AN 93-223649<br>* abstract *<br>---<br>-/-- | 1,10,11,<br>18 | TECHNICAL FIELDS SEARCHED (Int.Cl.6)<br><br>B01D<br>C10G |

The present search report has been drawn up for all claims

| Place of search | Date of completion of the search | Examiner |
|---|---|---|
| THE HAGUE | 26 September 1996 | Hoornaert, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 96 20 2344

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN<br>vol. 13, no. 105 (C-575), 13 March 1989<br>& JP-A-63 278502 (MITSUI TOATSU CHEM INC),<br>16 November 1988,<br>* abstract *<br>& DATABASE WPI<br>Section Ch, Week 8901<br>Derwent Publications Ltd., London, GB;<br>Class A88, AN 89-002506<br>* abstract *<br>--- | 1,6,10,<br>11,18 | |
| X | EP-A-0 461 607 (LINTEC CORP)<br><br>* abstract; claims 1,2,6,14 *<br>* page 3, line 15 - line 21 *<br>* page 4, line 58 - page 5, line 21 *<br>* examples 1,11 *<br>--- | 1,2,5,<br>12,18 | |
| X | CHEMICAL ABSTRACTS, vol. 115, no. 12,<br>23 September 1991<br>Columbus, Ohio, US;<br>abstract no. 116352p,<br>JOHNSON: "Effects of electron beam dosage<br>on cured homopolymer properties of<br>acrylate oligomers"<br>page 94; column 1;<br>XP002004320<br>* abstract *<br>& RADTECH '90 NORTH AM. CONF. PROC.,<br> no. 1, 1990,<br>pages 71-79,<br>---<br><br>-/-- | 1,10,11,<br>18 | **TECHNICAL FIELDS SEARCHED** (Int.Cl.6) |

The present search report has been drawn up for all claims

| Place of search | Date of completion of the search | Examiner |
|---|---|---|
| THE HAGUE | 26 September 1996 | Hoornaert, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

European Patent Office

**EUROPEAN SEARCH REPORT**

Application Number

EP 96 20 2344

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | JOURNAL OF POLYMER SCIENCE: PART A: POLYMER CHEMISTRY, vol. 31, 1993, NEW-YORK, USA, pages 239-247, XP000331769 F. IGNATIOUS: "Novel Carbamoyl Phosphonate Monomers and Polymers from Unsaturated Isocyanates" * abstract; table I * * page 243, column 2, last paragraph - page 246, column 1, line 2 * | 1-4,18 | |
| D,A | EP-A-0 336 241 (BAYER AG) * abstract; claims 1,5-10 * * page 6, line 33 - line 44 * * example 3 * | 1,8-12, 15-18 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 26 September 1996 | Hoornaert, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)